# EUROPEAN PATENT APPLICATION

(11) **EP 0 869 676 A1**
(43) Date of publication of application: **07.10.1998**
(21) Application number: 98302227.8
(22) Date of filing: 24.03.1998
(51) Int. Cl.: H04N 5/57, H04N 5/44

(54) **Integrated picture quality control environment**

(30) Priority: 31.03.1997 US 829213
(71) Applicant: Compaq Computer Corporation, Houston Texas 77070 (US)
(72) Inventor: Vaughan, Mark P., Spring, Texas 77379 (US)
(74) Representative: Brunner, Michael John

(57) **Abstract**

A system providing an integrated picture quality control environment is disclosed. The system includes first and second sets of picture quality controls. The first set of picture quality controls is capable of controlling a picture signal at a first location, while the second set of picture quality controls is capable of controlling the picture signal at a second location. To prevent conflict between the controls at the first and second locations, a means for integrating the first and second set of picture quality controls is utilized such that the generation of control signals by either of the first and second set of picture quality controls only affects a picture signal at a single preselected location.

## Description

The present invention relates to convergence devices such as personal computer/television ("PC/TV") convergence devices, and more particularly, to an integrated picture quality control environment for controlling, at a single location, a picture signal in response to control inputs from a plurality of different control locations.

A PC/TV convergence device is a fully functional computer integrated with television functionality, providing television (TV) viewing (via broadcast, cable, Digital Satellite, or other broadcast media) and personal computing functionalities. This convergence of computer and television functionalities provides a user with combined access to television programs and computer and Internet information.

Typically a PC/TV convergence device consists of a fully functional computer including fax/modems, CD-ROM players, and media storage such as hard drives and floppy drives. The computer is integrated with television functionality, with the television's NTSC (National Television Standards Committee) interlaced signal being converted to a scan video graphics adapter (VGA) signal or the computer's scan VGA signal being converted to an NTSC interlaced signal. Because the PC/TV convergence device is controlled by the computer's operating system, the PC/TV convergence device can, among other things, display PC applications and TV programs on a single monitor. The convergence of personal computer and television functionalities into a single device also permits the utilization of the communications bandwidth, mass storage and graphics of the computer to deliver, store and display applications during a traditional television viewing environment.

The PC/TV convergence device is a user interactive device. For example, if a user is watching a television program, the PC/TV convergence device will enable the user to download information about that particular program, such as from a web site where additional information about or related to the program might be located.

Integrated PC/TV and similar systems provide a user with multiple places for controlling the characteristics of, for example, a picture signal. Various control sets within the system enable the user to control picture signal characteristics such as brightness and contrast. The control sets may be located at a monitor, remote control or video controller chip and enable a picture signal to be altered at each of these locations. This can create a problem if the signal is changed differently at two separate locations, and the control signals generated by the controllers conflict. An imbalance between the control signals of the changed characteristic can be such that a distorted or blank display is presented on the display monitor. A manner to limit the effects of multiple control locations on a single signal would be greatly desirable.

The present invention overcomes the foregoing and other problems with an integrated picture quality control system for use with a convergence system. The integrated picture quality control system includes a first set of picture quality controls associated with a device in, e.g., a PC/TV system, such as a display monitor. The picture quality controls enable control of a picture signal at a first location. A second set of picture quality controls are associated with another device in the system such as a video controller or remote control. The second set of controls also enables control of the picture signal, but at a different, second location.

A central controller accepts information from the picture quality controls of the first and second locations such that generation of control signals at either of the locations only controls the picture signal at a single location associated with the central control location rather than at each of the separate locations associated with the first and second picture quality controls. In a preferred embodiment, the picture quality controls may comprise contrast or brightness controls. However, the present invention would be equally applicable to audio or line signals, or to any type of system including controls for generating control signals affect a single signal at two separate locations.

A more complete understanding of the present invention may be had by reference to the following detailed description and appended claims when taken in conjunction with the accompanying drawings wherein:
FIGURE 1 is a block diagram illustrating a PC integrated with a convergence functionality module and display monitor; and
FIGURE 2 is a block diagram of the integrated picture quality control environment of the present invention.

With reference now to the figures that are depicted, various block diagrams illustrating the system of the present invention are presented. The purpose of these block diagrams is to illustrate the features of the invention and the basic principles of operations of embodiments thereof. These block diagrams are not necessarily intended to schematically represent particular modules of circuitry or any particular data or control paths.

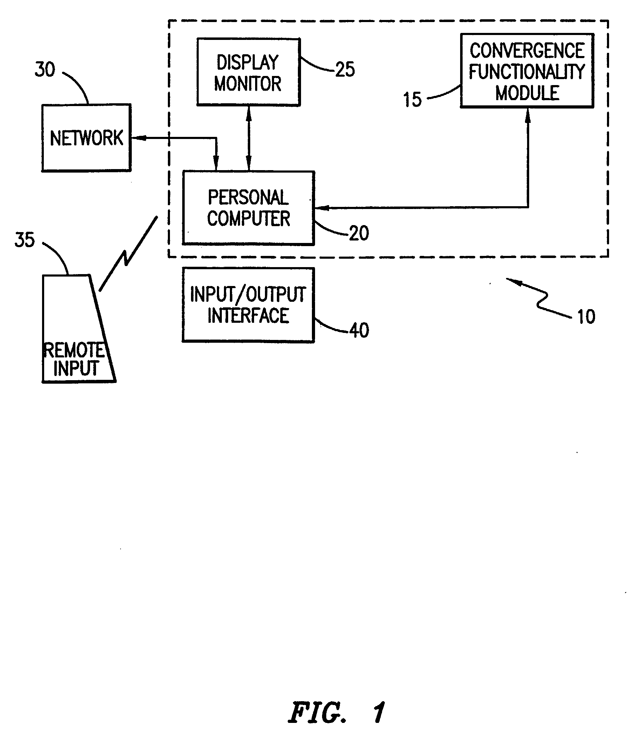

Referring now to FIGURE 1, there is shown a block diagram illustrating a PC/convergence functionality module convergence system 10. While the following description envisions a software implemented system, it should be realized that the described embodiments may be implemented in hardware, software, firmware or any other implementation consistent with the spirit of the invention. The convergence system 10 includes a convergence functionality module 15, a personal computer (PC) 20 and a display monitor 25. The system 10 further includes a network interface 30 enabling system access to a variety of external networks, such as the Internet; a remote control device 35 and an input/output interface 40. In general, the convergence system 10 can operate in various modes. It can be operated in a personal computer mode, it can operate in a mode according to the convergence functionality module, or in a combination thereof.

Examples of functionalities possibly provided by the convergence functionality module include a television or a gaming system. For purposes of discussion, the remainder of the description with respect to FIGURE 1 and the remaining drawings will be with respect to a convergence functionality module operating as a television module.

When the convergence system 10 operates in a television mode, information is received from a television/video source and displayed on the display monitor 25. When the convergence system 10 operates in a personal computer mode, the personal computer 20 performs typical computer functions such as executing and running software, including playing games, and interfacing with the Internet via the external network 30. The output of the personal computer 20 is displayed on the display monitor 25.

The convergence system 10 can also be utilized in a combination mode utilizing the functionality of both the television functionality module 15 and the personal computer 20. When operating in combination mode, a user will be able to use the personal computer to interact with the television module 15. For example, during a particular television program, a user could download information about the program from the Internet. The combination mode also permits a user to watch television while interacting with the operation of the personal computer 20, such as by having a small window displaying a television show or video on the screen while also displaying normal personal computer operations on the remainder of the screen. When operating the convergence system 10 in combination mode, a user can also switch between utilizing the personal computer 20 and television module 15. For example, during commercials, a user can readily switch from watching a commercial during a television program to utilizing a computer program until the television program resumes, at which time the user could switch back to the television 15.

As further illustrated in FIGURE 1, the convergence system 10 includes an input/output interface 40. Input/output interface 40 is for sending and receiving data to and from the convergence system 10. In the case of a television functionality module 15, input/output interface 40 is for interfacing with a video source for the television module and for inputting and outputting data to and from the convergence system 10 through devices such as another television, a printer, a modem, an external disk drive and other computer and television peripherals. The remote input 35 enables a user to remotely control the personal computer 20 and the television functionality module 15 through a remote connection. This connection may be wireless or wireline, and includes RF, infrared or other types of communications capabilities.

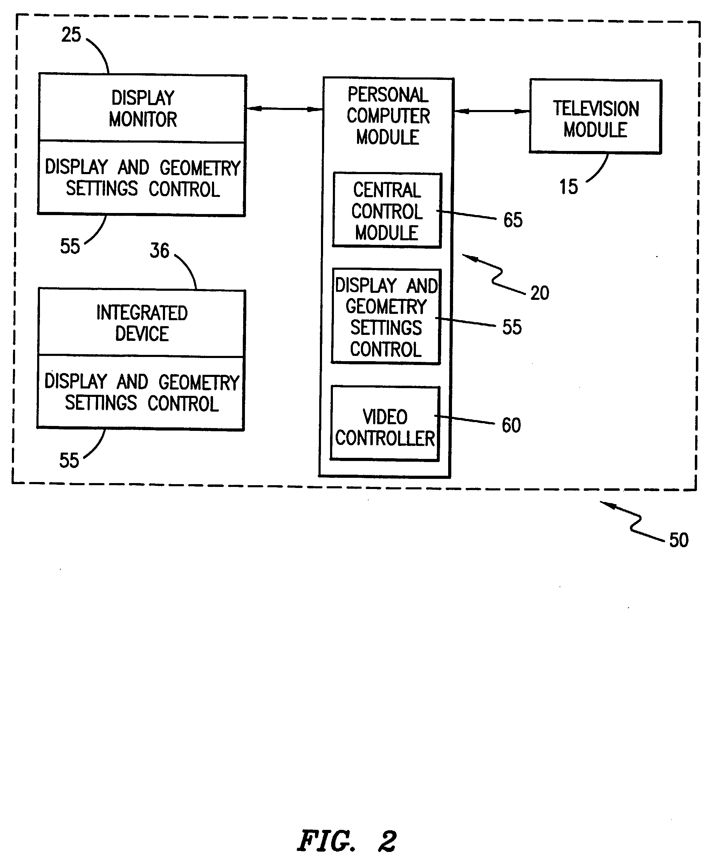

Referring now to FIGURE 2, there is illustrated a PC/TV convergence system 50 including the integrated picture quality control environment of the present invention. As discussed previously, the PC/TV convergence system 50 includes a display monitor 25, personal computer module 20 and television functionality module 15. Associated with the display monitor 25 are display and geometry setting controls 55 enabling a user to control various characteristics of a picture signal provided to the monitor from the PC module 20 or TV module 15. The controls 55 may include means for altering and adjusting the contrast, brightness or any other quality associated with the picture signal. An additional set of display and geometry setting controls 55 may be associated with a video controller 60 within the PC module 20 of the system 50. These display and geometry setting controls 55 enable a user to alter the quality of the picture signal by interacting with the PC module 20 through the input/output interface 40 (FIGURE 1). Finally, display and geometry setting controls 55 may be associated with another integrated device 36 interacting with the TV module 15 or PC module 20. The integrated device 36 can comprise any device which may control the picture signal such as a DVD player. Each of these controls 55 alter the picture signal independently of the other controls and at separate locations. Thus, there is a situation where a single picture signal can potentially be controlled at three separate locations, namely the monitor 25, the PC module 20 and the integrated device 36. By centralizing the response to the inputs of the setting controls 55, the potential for conflicting or incompatible control settings between two separate locations may be avoided. This is accomplished by utilizing a central control module 65. The central control module 65 has been illustrated as being located within the PC module 20 of the PC/TV convergence system 50. However, it should be realized that placement of the central control module 65 within the PC module 20 is not required. The central control module 65 may be located within the monitor 25 or TV module 15. Alternatively, control for the various types of signal characteristics may be located separately throughout the system 50.

Whenever control signals are generated by one group of the display and geometry setting controls 55 at either the monitor 25, PC module 20 or remote input device 40, the picture signal is not altered at the site of the display and geometry setting controls, but is instead altered at a single location associated with the central control module 65. Thus, in the case of FIGURE 2, all alterations to the characteristics of the picture signal would be made at the central control module 65 in the PC module 20. This situation prevents the creation of conflicting control signals at different locations for the picture signal, and helps maintain consistency in the display quality.

During system startup, the various signal characteristics which can be controlled by the display and geometry setting controls 55, such as brightness and contrast, are set to preset, neutral levels at all locations. This enables consistency throughout the system and prevents initial incompatibilities between control signals from different locations.

While the foregoing discussion has related to the integration and control of a picture signal for a display monitor 25, the present invention is equally applicable to other types of signals such as audio, line signals, etc. that potentially may be controlled at a number of locations throughout a system. Systems operating according to the present invention would enable the altering of characteristics of an audio signal at a single central control location in response to inputs from a number of different controls for the audio signal at a plurality of locations.

Obviously, numerous modifications and variations are possible in view of the teachings above. For example, which a PC/TV convergence device has been discussed in detail above, the teachings of the present invention could be employed in any number of convergence devices, such as PC/game systems, PC video telephone systems, and the like. Accordingly, the present invention is not limited by the embodiments disclosed, but is capable of numerous rearrangements, modifications, and substitutions, without departing from the spirit and scope of the invention as set forth and defined by the following claims.

## Claims

1. An integrated control system, comprising:
a first set of controls capable of controlling a signal at a first location;
a second set of controls capable of controlling the signal at a second location;
means for integrating the first and second set of controls such that generation of control signals by either the first or the second set of controls only affects the signal at a single location.

2. The system of claim 1, wherein the controls comprise picture quality controls and the signal comprises a picture signal.

3. The system of claim 1, wherein the controls comprise volume controls and the signal comprises an audio signal.

4. An integrated picture quality control system for use with integrated personal computer and television functionalities, comprising:
a first set of picture quality controls associated with a display monitor for controlling a picture signal at a first location;
a second set of picture quality controls associated with a video controller for controlling a picture signal at a second location; and
a central controller for the first and second set of picture quality controls such that generation of control signals by either the first or the second set of picture quality controls only affects the picture signal at a single location.

5. The system of claim 2 or claim 4, wherein the picture quality controls include a contrast control.

6. The system of claim 2 or claim 4, wherein the picture quality control include a brightness control.

7. The system of claim 2 or claim 4, wherein the controls comprise line level controls and the signal comprises a line level signal.

8. The system of any of claims 4 to 7, further including:
a third set of picture quality controls associated with a remote control for controlling a picture signal at a third location; and
wherein the central controller further responds to control signals from the third set of picture quality controls.

9. An integrated picture quality control system, comprising:
a first set of picture quality controls for controlling a plurality of picture signal characteristics at a first location;
a second set of picture quality controls for controlling a plurality of picture signal characteristics at a second location;
means for integrating the first and second set of picture quality controls such that generation of control signals by either the first or the second set of picture quality controls relating to a first picture signal characteristic affects the picture signal at a first single location and generation of control signals by either the first or the second set of picture quality controls relating to a second picture signal characteristic affects the picture signal at a second single location.

10. The system of claim 9, wherein the first picture signal characteristics comprise contrast and the second picture signal characteristics comprise brightness.

11. The system of claim 1 or claim 9, wherein the means for integrating comprises a central control module.

12. A method for providing integrated control of a signal, comprising the steps of:
generating a first set of control signals capable of controlling a signal at a first location;
generating a second set of control signals capable of controlling a signal at a second location; and
controlling the signal at a single location in response to the first and the second set of control signals.

13. The method of claim 12, wherein the signal comprises a picture signal.

14. The method of claim 12, wherein the signal comprises an audio signal.

15. The method of claim 12, wherein the first and second set of control signals comprise contrast control signals.

16. The method of claim 12, wherein the first and second set of control signals comprise brightness control signals.
